**Europäisches Patentamt**

**European Patent Office**

**Office européen des brevets**

(19)

(11) Veröffentlichungsnummer : **0 335 826 B1**

(12)

# EUROPÄISCHE PATENTSCHRIFT

(45) Veröffentlichungstag der Patentschrift :
**08.07.92 Patentblatt 92/28**

(21) Anmeldenummer : **89730078.6**

(22) Anmeldetag : **20.03.89**

(51) Int. Cl.⁵ : **B65D 85/57**, G11B 23/03

(54) **Schutzhülle für einen scheibenförmigen Aufzeichnungsträger.**

(30) Priorität : **29.03.88 DE 8804383 U**
**19.04.88 DE 8805393 U**

(43) Veröffentlichungstag der Anmeldung :
**04.10.89 Patentblatt 89/40**

(45) Bekanntmachung des Hinweises auf die
Patenterteilung :
**08.07.92 Patentblatt 92/28**

(84) Benannte Vertragsstaaten :
**AT BE CH DE ES FR GB IT LI NL SE**

(56) Entgegenhaltungen :
**DE-A- 3 120 754**
**DE-A- 3 215 378**
**DE-U- 6 606 413**

(73) Patentinhaber : **Schwerdtle & Schantz GmbH**
**Buschkrugallee 33**
**1000 Berlin 47 (DE)**

(72) Erfinder : **Schantz Peter**
**Lassenstr. 26**
**W-1000 Berlin 33 (DE)**

(74) Vertreter : **Christiansen, Henning, Dipl.-Ing.**
**Patentanwalt CHRISTIANSEN Pacelliallee**
**43/45**
**W-1000 Berlin 33 (DE)**

EP 0 335 826 B1

Jouve, 18, rue Saint-Denis, 75001 PARIS

## Beschreibung

Die Erfindung betrifft eine Umhüllung für eine Schallplatte der im Oberbegriff des Anspruchs 1 angegebenen Art.

Eine derartige Umhüllung ist beispielsweise bekannt aus der DE-B-32 15 378.

Die bekannte Umhüllung besteht aus wenigstens zwei aneinander anschließenden, insbesondere quadratischen, Seitenwandungen mit Kantenlängen, die größer als der Durchmesser der Schallplatte sind und aus Papier, Pappe, Fliesstoff, Kunststoff oder dergleichen bestehen, von denen eine als Trägerplatte ausgebildet ist. Dabei sind reliefartige Erhebungen vorgesehen, welche die Schallplatte in radialer Richtung abstützen. Diese bestehen aus einem aufgedruckten oder aufgeschäumten Kunststoff.

Ferner ist es aus der DE-GM 66 06 413 bekannt, derartige reliefartige Erhebungen durch ringförmige Einprägungen zu erzeugen.

Weiterhin ist aus der DE-A-33 01 644 eine Kunststoffklappkassette bekannt, welche ebenfalls derartige Erhebungen im Randbereich bzw. im zentralen Bereich aufweist und somit die Platte gegen ein seitliches Herausgleiten schützen. Eine ähnliche Ausführung - wiederum aus Karton gefertigt - ist auch aus der DE-A-31 20 754 bekannt, wo eine Schaumstoffplatte mit einem Loch als Ausnehmung zur Aufnahme des Aufzeichnungsträgers dient.

Bei den bekannten Kassetten aus Karton besteht der Nachteil, daß der Aufzeichnungsträger beim Öffnen der Umhüllung durch Aufklappen aus der Aufnahme herausgleitet und herausfällt. Bei einer Kunststoffausführung wird das Herausfallen durch eine entsprechend massive Ausführung der Kassette mit einem Mittelstück, welches den Aufzeichnungsträger in seinem zentralen Loch klemmend hält, verhindert.

Eine derartige Ausführung ist jedoch aufwendig in der Herstellung und erfordert einen relativ großen Materialaufwand. Wenn die Noppen oder Erhebungen zur Sicherung des Aufzeichnungsträgers in radialer Richung aus einem weiteren auf das Trägermaterial aufzubringenden Material wie Kunststoff, insbesondere Schaumstoff, bestehen, verteuert sich die Herstellung der Umhüllung infolge des zusätzlichen Materialaufwands. Werden die Begrenzungen lediglich durch Prägungen in Form von Noppen oder dergleichen angebracht, so sind sie relativ unwirksam, da sie in der radialen Bewegungsrichtung des Aufzeichnungsträgers abgeschrägt sind und daher von diesem relativ leicht überwunden werden können.

Der Erfindung liegt die Aufgabe zugrunde, eine - insbesondere nach Art eines Buchdeckels aufklappbare - Schallplattenumhüllung zu schaffen, welche aus einem einheitlichen folienförmigen Material herstellbar ist, und in der der Aufzeichnungsträger in der aufgeklappten Position des Deckels einerseits gegen unbeabsichtigtes Herausfallen zuverlässig gesichert ist, andererseits aber sich in einer Position darbietet, in der er vom Benutzer sicher gegriffen und leicht zur Benutzung herausgeführt werden kann.

Diese Aufgabe wird durch die im kennzeichnenden Teil des Anspruchs 1 angegebenen Merkmale gelöst.

Besonders vorteilhaft bei der Erfindung ist die Tatsache, daß sich die erfindungsgemäße Schutzhülle durch eine für übliche Verpackungsmaterialien (Faltkartons, Umhüllungen und dergleichen) geeignete Fertigungsvorrichtung in einem Arbeitgang herstellen läßt, so daß sich eine kostengünstige Fabrikation ergibt. Der Aufzeichnungsträger ruht in einer Ausnehmung, welche durch die entsprechend ausgesparten auf die Grundfläche geklebten äußeren Deckflächenteile begrenzt wird. Ein innerer von den äußeren Deckflächenteilen abgetrennter restlicher Deckflächenteil ist mit ersteren mittels Stegen verbunden und bildet eine Tasche für den Aufzeichnungsträger, so daß dieser in der Ausnehmung gehalten wird. Die restliche Deckfläche (Restfläche) wird durch trennende Schnitte gleichzeitig mit den sie mit den äußeren Deckflächenteilen verbindenen Stegen und als Teil der im übrigen auf die Grundfläche kaschierten Deckfläche erzeugt, d.h sie ist im Gegensatz zu dem den kreisscheibenförmigen Aufzeichnungsträger umgebenden Bereich nicht mit der Grundfläche flächig verbunden.

Der Aufzeichnungsträger läßt sich in eine mit der restlichen Deckfläche gebildete "Tasche" einschieben, wobei durch die schmalen Stege der Restbereich so flexibel gehalten wird, daß er sich in einem solchen Abstand zur Grundfläche erstreckt, der der Dicke des Aufzeichnungsträgers entspricht. Die Breite der Stege ist so bemessen, daß sie einerseits flexibel genug sind, um zur Aufnahme des Aufzeichnungsträgers in der geschilderten Weise nachzugeben, andererseits die restliche Deckfläche aber in Gebrauch genügend sicher halten. Ein Bereich von mindestens 180° des Kreisumfangs des Aufzeichnungsträgers ist frei von Stegen, so daß er in den gebildeten Taschenbereich ohne Schwierigkeiten eingeschoben werden kann.

Die Grundfläche kann nun ihrerseits direkt mit weiteren Grundflächen zur Aufnahme von Aufzeichnungsträgern verbunden sein oder aber über einen flexiblen Falz mit einem Abdeckteil verschlossen werden, der im wesentlichen mit den Abmessungen der Grundfläche übereinstimmt und den Aufzeichnungsträger durch Zuklappen des Deckels vollständig verschließt und gegen äußere Einwirkung sichert. Die erfindungsgemäße Lösung kann in den verschiedensten Ausführungsformen zum Einsatz kommen. So können auch mehrere Grundflächen für weitere Aufzeichnungsträger über Falze getrennt aneinander anschließen, so daß sich durch

2

Aufeinanderklappen der Bereiche Hüllen für mehrere Aufzeichnungsträger bilden lassen.

Desgleichen können auch Grundflächen für einzelne Aufzeichnungsträger nach Art eines Buches gebunden werden, so daß sie ein Sammelalbum für eine größere Anzahl derartiger Aufzeichnungsträger bilden. Dabei kann eine Grundfläche als Grundlage für an beiden Seiten ankaschierte Deckflächen zur Aufnahme von zwei Aufzeichnungsträgern dienen.

Bei bevorzugten Weiterbildungen ist die Restfläche im wesentlichen halbkreisförmig ausgebildet und bildet somit eine Art "Tasche", welche auch zur Aufnahme von Informationstexten, Hinweisen und dergl. geeignet ist. Die Restfläche ist mit drei oder vier Stegen mit der übrigen Deckfläche verbunden. Dadurch, daß das Material der Deckfläche mindestens im Bereich der Stege durch eine Materialschicht hoher Zugfestigkeit verstärkt ausgebildet ist, läßt sich eine praktisch beliebigen Belastungsanforderungen hinsichtlich der Benutzungshäufigkeit entsprechende Ausführung erzeugen. Eine einfache Herstellbarkeit ist gesichert, wenn die Materialschichten aus Karton bestehen und in Bereichen außerhalb der kreisförmigen Kante miteinander verklebt - und insbesondere mit Ausnehmungen und Schlitzen aus einer Materialschicht konstanter Dicke bestehen.

Insbesondere lassen sich auch nahezu beliebige Konfigurationen für die Aufbewahrung unterschiedlicher Anzahlen von Aufzeichnungsträgern erzeugen. So sind bevorzugt die Grundfläche zur Aufnahme zweier oder mehrerer Aufzeichnungsträger in einer Ebene nebeneinander vorgesehen und/oder die Grundflächen zur Aufnahme jeweils mindestens eines Aufzeichnungsträgers seitlich benachbart aneinandergrenzend und durch einen Falz oder eine sonstige scharnierartige Verbindung miteinander verbunden ausgebildet. Mindestens zwei Abdeckflächen von der Größe einer Grundfläche sind bevorzugt durch einen Falz oder eine sonstige scharnierartige Verbindung miteinander verbunden. Auch kann die Abdeckfläche mit einer angefügten Broschüre oder einer Einstecktasche oder eine Grundfläche beidseitig mit einer Deckfläche zur Aufnahme jeweils eines Aufzeichnungsträgers versehen sein. Eine Mehrzahl von Schutzhüllen lassen sich zu einem Buch binden.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1 ein erstes Ausführungsbeispiel der Erfindung zur Aufnahme eines Aufzeichnungsträgers in aufgeklapptem Zustand,
Figur 2 dieselbe Ausführung vor dem Kaschieren in aufgeklapptem Zustand,
Figur 3 eine andere Ausführungsform in aufgeklapptem Zustand,
Figur 4 die weitere Ausführungsform vor dem Zusammenkleben,
Figur 5 eine weitere Ausführungsform in perspektivischer Darstellung sowie
Figuren 6 bis 12 verschiedene Ausführungsvarianten zur Aufnahme von einem oder mehreren Aufzeichnungsträgern.

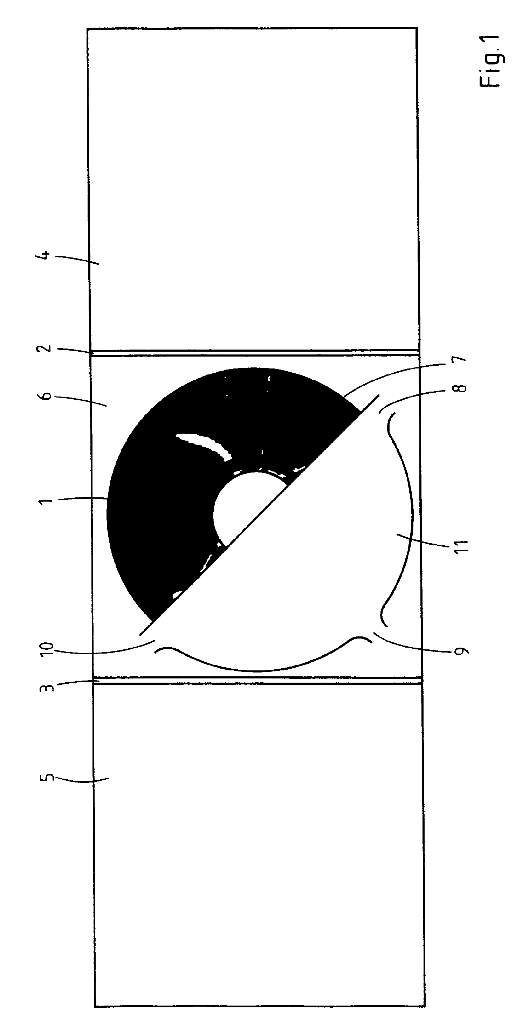

Bei der in Figur 1 dargestellten Ausführung einer erfindungsgemäßen Schutzhülle ist ein Aufzeichnungsträger 1 (insbesondere eine CompactDisc - CD) auf einer Grundfläche, die über Falze 2 und 3 mit zwei seitlich angebrachten flexiblen umklappbaren Abdeckflächen 4 und 5 verbunden ist, angeordnet.

Die herumklappbaren Abdeckflächen 4 und 5 dienen zur Aufnahme von Werbedrucken oder Erläuterungen bzw. zum Inhalt der auf dem Aufzeichnungsträger vorhandenen Darbietung gehörigen Bilddarstellungen. Der Aufzeichnungsträger 1 befindet sich auf einer - in der Zeichnung - nicht sichtbaren Grundfläche innerhalb einer auf die Grundfläche aufkaschierten Deckfläche 6, welche entlang der kreisförmigen Außenkante des Aufzeichnungsträgers ausgestanzt ist, so daß sich eine - ebenfalls kreisförmige - Kante 7 bildet, welche eine Begrenzung gegen eine Verschiebung des Aufzeichnungsträgers in radialer Richtung bildet. Diese Kante ist unterbrochen durch stegförmige Bereiche 8, 9 und 10, welche eine restliche Deckfläche (Restfläche) 11 mit dem den Aufzeichnungsträger 1 umgebenden Bereich 6 der Deckfläche verbunden halten. Die stegförmigen Bereiche sind, ausgehend von der kreisförmigen Kante 7 durch radial verlaufende Schnitte von dem restlichen Bereich 6 der Deckfläche abgeteilt.

Der restliche Bereich der Deckfläche 11 ist nicht mit der Unterlage verleimt, so daß er eine Tasche zur Aufnahme des Aufzeichnungsträgers 1 bildet und sich zu diesem Zweck von der (nicht sichtbaren) Grundfläche entfernen kann. Die restliche Deckfläche 11 verdeckt bei dem dargestellten Ausführungsbeispiel gerade die Hälfte des Aufzeichnungsträgers 1, so daß auf dessen Oberfläche angebrachte Beschriftungen zum wesentlichen Teil noch gelesen werden können. Gegebenenfalls läßt sich die Deckfläche 11 auch aus einer transparenten Kunststoffolie herstellen, so daß der Aufzeichnungsträger vollständig sichtbar bleibt.

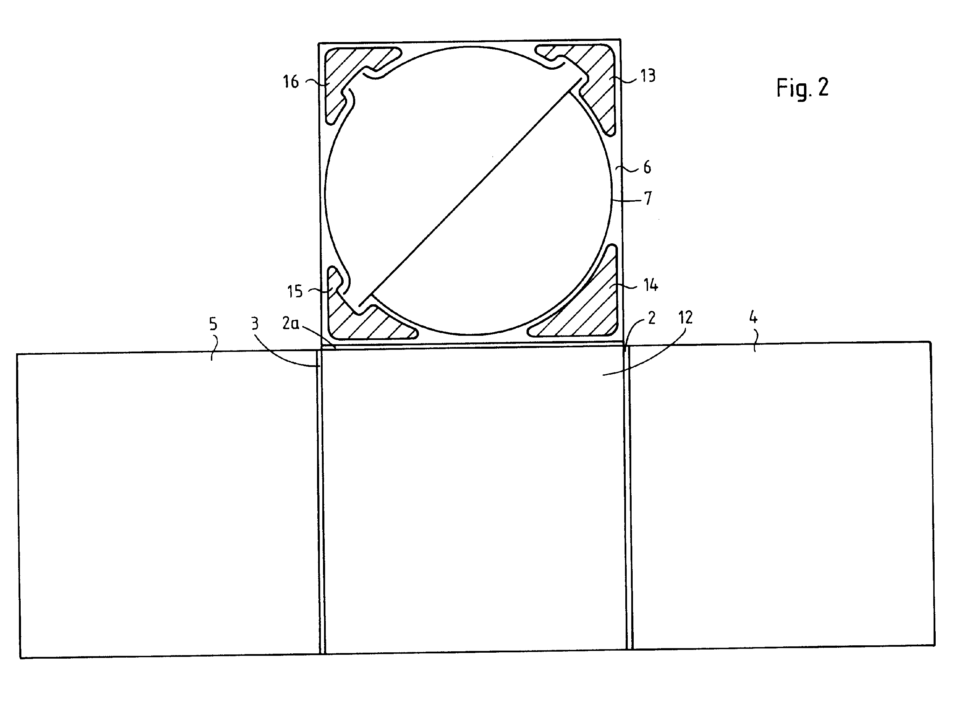

In Figur 2 ist die in Figur 1 dargestellte Umhüllung vor dem Zusammenfügen dargestellt. Hier ist die Grundfläche 12 sichtbar, weil die Deckfläche 6 noch nicht auf diese heruntergeklappt und mit den Klebebereichen 13 bis 16 mit dieser verklebt ist. Das Verkleben der schraffierten Bereiche 13 bis 16 mit der Grundfläche 12 bildet nach dem Herstellen der aussparenden Schlitze in der Deckfläche 6 den einzigen Arbeitsvorgang zur Herstellung der vollständigen Umhüllung, wenn davon ausgegangen wird, daß diese zuvor komplett bedruckt, gefalzt und ausgeschnitten worden ist. Die Grundfläche 12 ist mit der Deckfläche 6 mittels eines Falzes 2a scharnierartig verbunden. Grundflächen und Deckflächen sind auch bei den weiter unten zu beschreibenden Ausführungen von Schutzhüllen zur Aufnahme mehrerer Aufzeichnungsträger bevorzugt so mittels Falzen verbunden, daß jeder Grundfläche an einer freien Kante jeweils eine Deckfläche benachbart ist.

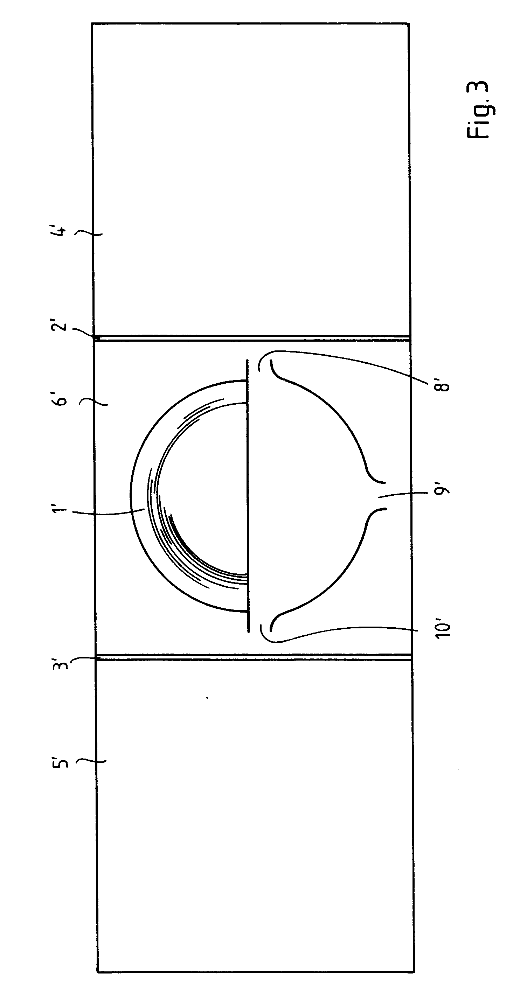

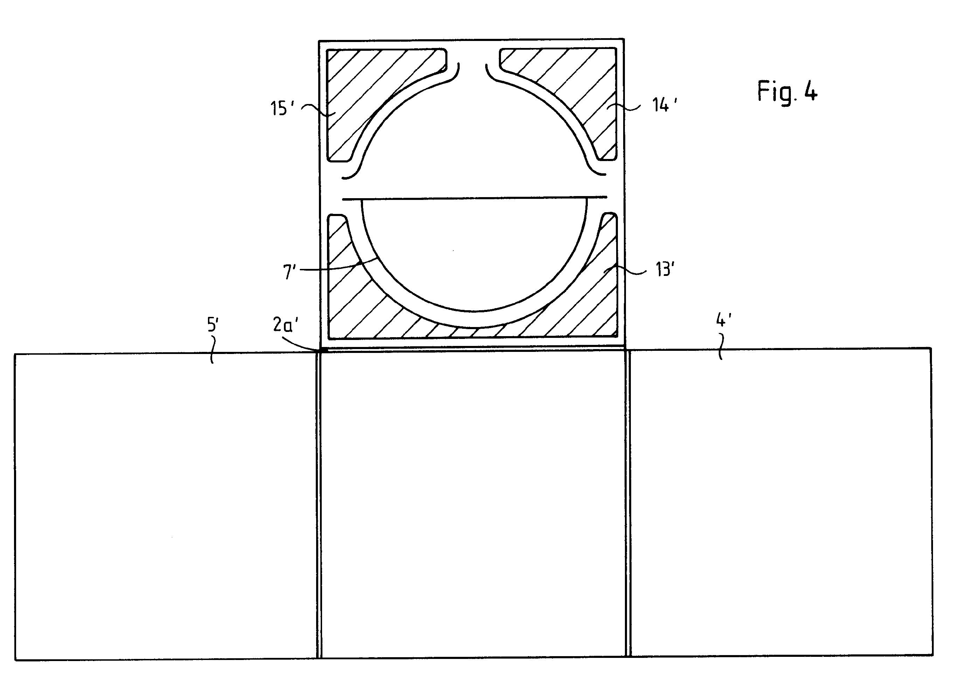

Während in Figur 2 der restliche Bereich 11 der Deckfläche 6 in Bezug auf die Grundfläche des Aufnahmebereiches für den Aufzeichnungsträger diagonal geteilt ist, ist bei dem in den Figuren 3 und 4 dargestellten Ausführungsbeispiel die Teilung horizontal mittig vorgesehen. Die Umhüllung ist insgesamt etwas kleiner ausgeführt und dient zur Aufnahme einer sogenannten "Mini-CD". Da die Ausführung im übrigen übereinstimmt, konnte die Beschreibung mit den entsprechenden Bezugzeichen vorgenommen werden, die jeweils mit einem zusätzlichen Strich (') versehen sind.

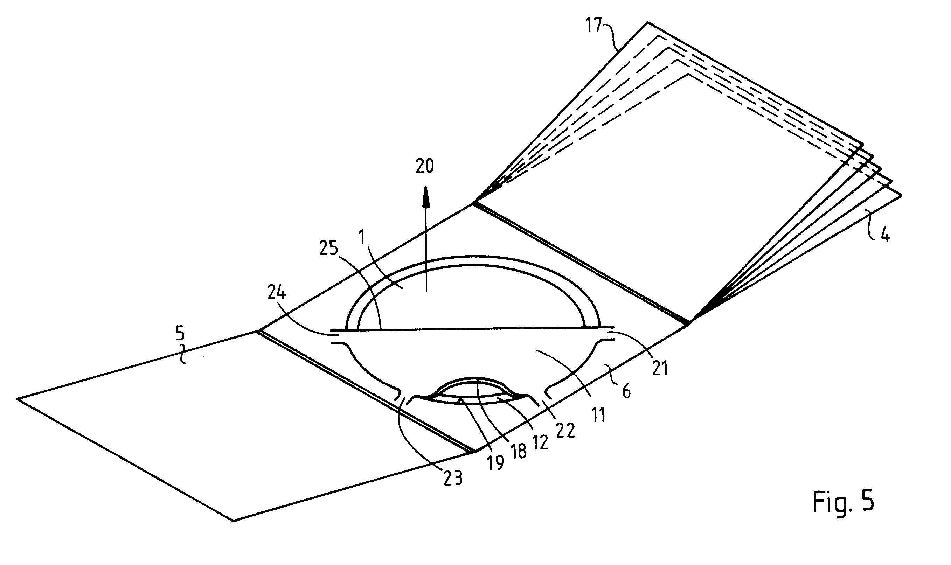

In Figur 5 ist eine Abwandlung des Ausführungsbeispiels gemäß Figur 1 dargestellt. Im Bereich der Abdeckfläche 4 ist eine Broschüre 17 aufgeleimt, welche im wesentlichen die Abmessungen der Grundfläche besitzt, so daß Erläuterungen zum Inhalt des Aufzeichnungsträgers 1 ggf. auch ausführlicher gehalten werden können. Für eine Broschüre oder dergleichen kann bevorzugt auch eine Einstecktasche an der Innenseite eines der Abdeckflächen 4 oder 5 vorgesehen sein (in der Zeichnung nicht dargestellt).

Die restliche Deckfläche 11 besitzt eine Ausnehmung 18, welche in dem entgegengesetzt zur Entnahmerichtung des Aufzeichnungsträger 1 am weitesten zurückliegenden Bereich vorgesehen ist. In diesem Bereich ist die Grundfläche sichtbar und eine Kante 19, welche die Begrenzung der Deckfläche bildet. Hier kann der Aufzeichnungsträger 1 mit den Daumen erreicht werden und in Entnahmerichtung (Pfeil 20) vorangeschoben werden, so daß er die seinen Weg begrenzende Kante der Deckfläche 6 in Entnahmerichtung 20 überwindet und sich dann durch Schieben mit dem Daumen in Richtung 20 innerhalb des freiliegenden Bereiches des Aufzeichnungsträgers 1 leicht vollständig aus seiner Ruheposition herausbringen läßt. Durch diese Handhabung ist gesichert, daß die (unten liegende) Aufzeichnungsseite des Aufzeichnungsträgers nicht mit den Fingern berührt werden muß. Da die Umhüllung vorzugsweise aus Karton (insbesondere Bristol-Karton) besteht, ist mit der Verschiebebewegung zwischen Aufzeichnungsträgerunterseite und verbleibender Deckfläche 6 keinerlei Gefährdung für die Aufzeichnung verbunden. Die verbleibende Deckfläche 11 wird bei Stegen 21 bis 24 gehalten. Die Anordnung der Verbindungsstege sowie der die Oberfläche des Aufzeichnungsträger in seiner Ruhestellung überquerenden Kante 25 der restlichen Deckfläche 11 kann nach verschiedenen geschmacklichen oder gestalterischen Ansprüchen in vielen Variationen gestaltet werden.

Es ist ersichtlich, daß sich mit den Mitteln der Erfindung eine einfach herstellbare, aber repräsentative Verpackung für einen scheibenförmigen Aufzeichnungsträger erstellen läßt, welche alle Möglichkeiten für die Aufnahme von zusätzlichen Texten oder Darstellungen bildet. Die verschiedenen vorzusehenden umklappbaren Deckflächen der Umhüllung erhöhen den Werteindruck des so verpackten Aufzeichnungsträgers.

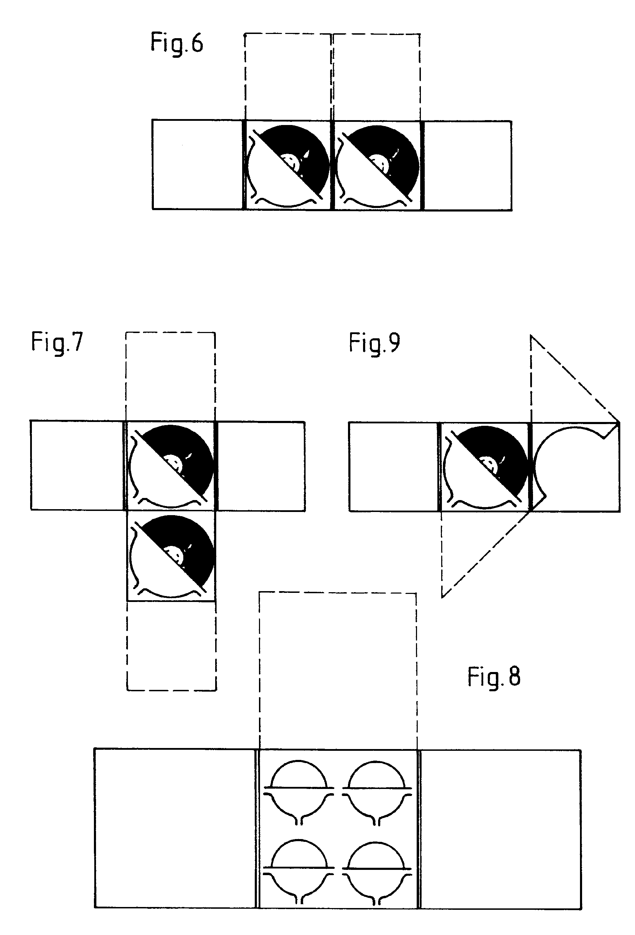

In den Figuren 6 bis 9 sind verschiedene Anordnungen vorgesehen, wobei die zur Erzeugung der Deckfläche über die jeweilige Grundfläche zur Aufnahme des Aufzeichnungsträgers herumklappbaren Deckflächen gestrichelt dargestellt sind.

Nach der Ausführung gemäß Figur 6 können mehrere Aufzeichnungsträger nebeneinander angeordnet sein, während sie gemäß Figur 7 - bezogen auf die Draufsicht - "übereinander" angeordnet sind. Bei der Ausführung nach Figur 6 werden zunächst die äußeren weiteren Deckflächen zugeklappt und dann die verbleibenden geöffneten Teile aufeinander geklappt. Entsprechendes gilt für die Ausführung gemäß Figur 7. Die Deckflächen sind vor dem Herumklappen jeweils durch einen Falz getrennt bei der zugehörigen Grundfläche angeordnet, so daß bei der Produktion alle Grund-, Deckund Abdeckflächen in einem Arbeitsgang nebeneinander ausgestanzt und dann gefaltet sowie gegebenenfalls verklebt werden können.

In Figur 8 sind mehrere Aufzeichnungsträger auf einem Grundflächenbereich nebeneinander angebracht, wobei die verschiedenen für die Aufnahme der Aufzeichnungsträger vorgesehenen Teile der Grundfläche nicht durch Falze voneinander getrennt sind.

Bei dem in Figur 9 dargestellten Ausführungsbeispiel ist die Deckfläche 6 in zwei Bereiche geteilt, wobei der mit der restlichen Deckfläche versehene Teil auf die Grundfläche kaschiert ist, während der weitere die Bewegungsrichtung des Aufzeichnungsträgers in Entnahmerichtung begrenzende Teil auf eine Abdeckfläche geklebt ist. Wird der in der Zeichnung rechte Abdeckteil geschlossen, so ist der Aufzeichnungsträger gegen ein unbeabsichtigtes Herausschieben gesichert, während in der vollständig geöffneten Stellung der Umhüllung der Aufzeichnungsträger in Entnahmerichtung ohne Behinderung herausgeschoben werden kann. Der weitere Abdeckteil sichert den Aufzeichnungsträger zusätzlich, da er den erstgenannten Abdeckteil auf den Aufzeichnungsträger preßt und damit die den Aufzeichnungsträger in der Entnahmerichtung sperrende Kante gegen die bei Entnehmen vorangeführte Kante des Aufzeichnungsträger drückt.

Bei den dargestellten Ausführungsbeispielen wird durch das Herstellen der Umhüllung aus flexiblem Karton ein Entnehmen des Aufzeichnungsträgers dadurch erleichtert, daß die Umhüllung in der Hand ebenfalls leicht gewölbt werden kann, so daß sich der Aufzeichnungsträger ohne weiteres ergreifen und herausziehen läßt.

Entsprechend läßt er sich auch nach dem Abspielen günstig wieder in die Umhüllung führen. Bei Bedarf kann der Aufzeichnungsträger in der Umhüllung bis in die Nähe der Einführungsöffnung eines Abspielgerätes geführt werden, wobei der durch eine Ausnehmung der restlichen Deckfläche entsprechend der Ausnehmung 18 in Figur 5 bei quer verlaufender Kante der restliche Deckfläche 11 gemäß Figur 3 mit dem Daumen aus seiner Ruheposition herausgeführt werden kann und so ohne weiteres in die Zuführungsöffnung gelangt.

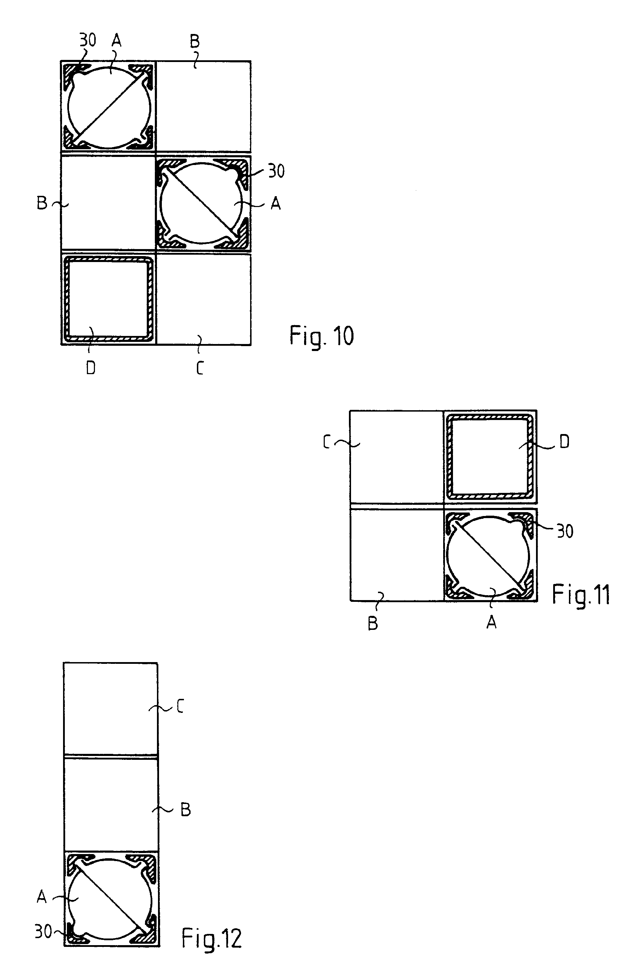

Die in den Figuren 10 bis 12 in noch nicht verklebtem Zustand dargestellten Ausführungen sind insbesondere bezuglich des Herstellungsaufwands bei der Bedruckung oder sonstigen Oberflächenveredlung der Umhüllung optimiert. Bei den dargestellten Ausführungen werden ebenfalls wieder die mit den schraffierten Leimflächen versehenen Felder auf die jeweils durch einen einfachen Falz getrennten herumgeklappt. Alle Ausführungsformen sind für alle Arten von scheibenförmigen Aufzeichnungsträgern, insbesondere CDs und Mini-CDs geeignet. Alle Grundflächen sind mit B, Deckflächen mit A, Abdeckflächen mit C und auf Abeckflächen herumklappbare Deckflächen mit D bezeichnet. Die mögliche Bedruckung erfolgt jeweils von der Rückseite der Zeichenebene.

Bei der Ausführung gemäß Figur 10 ist die Aufteilung so gewählt, daß bei der verklebten Ausführung die Einsteköffnungen benachbarter Aufzeichnungsträger aufnehmender Bereiche abwechselnd an einander gegenüberliegenden Deckflächen gelegen sind, so daß beim aufeinanderfolgenden Aufklappen aus der (schnekkenförmig aufgewickelten) geschlossenen Stellung der jeweils nächstfolgende Aufzeichnungsträger wieder im selben Zugriffsbereich entnehmbar wird. Bei einer beliebigen ziehharmonikaartigen Faltung liegt ein Aufzeichnungträger beim "Durchblättern" dabei beispielsweise jeweils rechts, während das linke benachbarte Feld die zugehörige gedruckte Erläuterung oder Abbildung enthält. Nach dem Wenden der Anordnung gilt das Entsprechende. Die dargestellte Ausführung gemäß Figur 10 enthält beispielhaft nur die Möglichkeit zur Aufnahme zweier Aufzeichnungsträger und ein Abdeckteil, das mit einer herumzuklappenden Leerfläche versehen ist. Von besonderer Bedeutung ist bei dieser Gruppe von Ausführungsbeispielen, daß die Bedruckung oder anderweitige Veredelung der Außenoberfläche (insbesondere durch Beschichten) nur jeweils einseitig zu erfolgen braucht.

Die in Figur 11 dargestellte Ausführung entspricht derjenigen gemäß Figur 10, wobei lediglich ein einzelner Aufzeichnungsträger aufgenommen werden kann. Auch hier ist die Abdeckfläche für beidseitige Bedruckung geeignet.

Bei der Darstellung gemäß Figur 12 verbleibt bei einseitiger Bedruckung nach dem Verkleben ein einfacher, einseitig bedruckter Klappdeckel zum Abdecken des in der Hülle befindlichen Aufzeichnungsträgers, da lediglich eine einfache Abdeckfläche verbleibt. Hier ist der Materialbedarf ein Minimum.

Die bei den letzten drei Ausführungsformen vorgesehenen Aussparungen 30 ermöglichen ein erleichtertes Erfassen des Aufzeichnungsträgers zum Herausziehen aus der Umhüllung.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch machen.

**Patentansprüche**

1. Schutzhülle für einen scheibenförmigen Aufzeichnungsträger, insbesondere für eine Compact-Disc, bestehend aus zwei miteinander benachbart verbundenen Materialschichten, von denen die eine eine Grundfläche und die andere eine Deckfläche bildet, wobei die Deckfläche eine Ausnehmung mit einer im wesentlichen kreisförmigen Kante zur Aufnahme des Aufzeichnungsträgers und zur Begrenzung seiner Bewegungsrichtung in radialer Richtung aufweist, **dadurch gekennzeichnet,** daß an die im wesentlichen kreisförmige Kante (7) mindestens zwei Stege (8 bis 10) angrenzen, welche eine nicht mit der Grundfläche (12-Fig.2) verbundene Restfläche (11) innerhalb der kreisförmigen Kante halten, wobei die Stege innerhalb eines Teils des Kreisumfangs entsprechend einem Winkel von bis zu 180° angeordnet sind, und daß die Stege derart flexibel ausgebildet sind, daß sie einen Abstand zwischen Deckfläche und Grundfläche zur Aufnahme des Aufzeichnungsträgers (1) zulassen.

2. Schutzhülle nach Anspruch 1, **dadurch gekennzeichnet,** daß die Restfläche (11) im wesentlichen halbkreisförmig ausgebildet ist.

3. Schutzhülle nach einem der vorangehenden Ansprüche, **dadurch gekennzeichnet,** daß die - insbesondere drei oder vier, Stege (8 bis 10) durch Schnitte begrenzt werden, welche sich von der kreisförmigen Kante ausgehend in radialer Richtung in die Deckfläche hinein erstrecken.

4. Schutzhülle nach einem der vorangehenden Ansprüche, **dadurch gekennzeichnet,** daß das Material der Deckfläche (6, 11) mindestens im Bereich der Stege (8 bis 10) durch eine Materialschicht hoher Zugfestigkeit verstärkt ist.

5. Schutzhülle nach einem der vorangehenden Ansprüche, **dadurch gekennzeichnet,** daß die Grund- und Deckfläche aus Karton bestehen und in Bereichen (13 bis 16) außerhalb der kreisförmigen Kante miteinander verklebt und/oder an einer Kante durch einen Falz oder eine sonstige scharnierartige Verbindung (2a) klappbar miteinander verbunden sind.

6. Schutzhülle nach einem der vorangehenden Ansprüche, **dadurch gekennzeichnet,** daß die Grund- und Deckfläche (12 bzw. 6) zur Aufnahme mehrer Aufzeichnungsträger in einer Ebene nebeneinander vorgesehen sind (Fig. 8).

7. Schutzhülle nach einem der vorangehenden Ansprüche, **dadurch gekennzeichnet,** daß Grundflächen zur Aufnahme jeweils mindestens eines Aufzeichnungsträgers seitlich benachbart aneinandergrenzen und durch einen Falz oder eine sonstige scharnierartige Verbindung klappbar verbunden sind (Fign. 6 oder 7).

8. Schutzhülle nach einem der vorangehenden Ansprüche, **dadurch gekennzeichnet,** daß mindestens eine Abdeckfläche (4, 5) von im wesentlichen der Größe der Grundfläche durch einen Falz oder eine sonstige scharnierartige Verbindung klappbar mit der Grundfläche verbunden ist.

9. Schutzhülle nach Anspruch 8, **dadurch gekennzeichnet,** daß ein in Entnahmerichtung des Aufzeichnungsträgers gelegener Teil der Deckfläche von der übrigen Deckfläche getrennt und mit der benachbarten Abdeckfläche so verklebt ist, daß er bei auf die Grundfläche herumgeklappter Abdeckfläche die kreisförmige Kante zur Aufnahme des Aufzeichnungsträgers ergänzt (Fig. 9).

10. Schutzhülle nach einem der Ansprüche 8 oder 9, **dadurch gekennzeichnet,** daß die Abdeckfläche (4) mit einer angefügten Broschüre (17) oder einer Einstecktasche versehen ist.

11. Schutzhülle nach einem der vorangehenden Ansprüche, **dadurch gekennzeichnet,** daß eine Grundfläche (12) beidseitig mit einer Deckfläche zur Aufnahme jeweils eines Aufzeichnungsträgers versehen ist.

12. Schutzhülle nach einem der vorangehenden Ansprüche, **dadurch gekennzeichnet,** daß in der Restfläche in einem in Bezug auf die Entnahmerichtung des Aufzeichnungsträgers zurückliegenen Bereich eine Ausnehmung (18) vorgesehen ist.

13. Schutzhülle nach einem der vorangehenden Ansprüche, **dadurch gekennzeichnet,** daß in der Deckfläche in einem in Bezug auf die Entnahmerichtung des Aufzeichnungsträgers vorangeführten Bereich eine Ausnehmung (30) vorgesehen ist.

14. Schutzhülle nach Anspruch 12 oder 13, **dadurch gekennzeichnet,** daß die Ausnehmung (18) an die kreisförmige Kante (19, 30) der Deckfläche (6) angrenzt.

15. Schutzhülle nach einem der vorangehenden Ansprüche, **dadurch gekennzeichnet,** daß bei einander benachbarten Paaren von Grundflächen (A) und Deckflächen (B) die Positionen der beiden letztgenannten jeweils vertauscht sind.

16. Schutzhülle nach einem der vorangehenden Ansprüche, **dadurch gekennzeichnet,** daß einer Abdeckfläche (C) jeweils eine Deckfläche (O) benachbart ist, wobei die Deckfläche von der zugeordneten Abdeckfläche durch einen Falz getrennt und auf diese herumklappbar ist.

17. Schutzhülle nach einem der vorangehenden Ansprüche, **dadurch gekennzeichnet,** daß jeder Grundfläche (B) und gegebenenfalls jeder Abdeckfläche (C) jeweils eine Deckfläche (A bzw. D) benachbart ist, wobei jede Deckfläche von der zugeordneten Grund- bzw. Abdeckfläche durch einen Falz getrennt und auf diese herumklappbar ist.

18. Schutzhülle nach einem der vorangehenden Ansprüche, **dadurch gekennzeichnet,** daß die Deckfläche einschließlich Ausnehmungen und/oder Schlitzen aus einer Materialschicht konstanter Dicke besteht.

19. Schutzhülle nach einem der vorangehenden Ansprüche, **dadurch gekennzeichnet,** daß eine Mehrzahl von Schutzhüllen zu einem Buch gebunden ist.

## Claims

1. A protective sleeve for a disc-shaped recording carrier, more particularly for a compact disc, comprising two adjacent connected material layers, one of which forms a base surface and the other a cover surface, in which the cover surface has a recess with a substantially circular edge for receiving the recording carrier and for limiting its direction of movement in a radial direction, **characterised in that** at least two webs (8 to 10) border on the substantially circular edge (7), said webs holding a residual surface (11) which is not connected to the base surface (12 - Fig. 2) within the circular edge, in which the webs are arranged within a part of the circle periphery corresponding to an angle of up to 180 degrees, and that the webs are flexibly formed such that they permit a spacing between the cover surface and the base surface for receiving the recording carrier (1).

2. A protective sleeve according to claim 1, **characterised in that** the residual surface (11) is substantially semicircular.

EP 0 335 826 B1

3. A protective sleeve according to any one of the preceding claims, **characterised in that** the, in particular three or four, webs (8 to 10) are limited by cuts which extend into the cover surface starting from the circular edge in a radial direction.

4. A protective sleeve according to any one of the preceding claims, **characterised in that** the material of the cover surface (6,11) is strengthened at least in the region of the webs (8 to 10) by a layer of material of high tensile strength.

5. A protective sleeve according to any one of the preceding claims, **characterised in that** the base and cover surface comprise cardboard and are glued together in the regions (13 to 16) outside the circular edge and(or are connected together foldably at one edge by a fold or some other hinge-like connection (2a).

6. A protective sleeve according to any one of the preceding claims, **characterised in that** the base and cover surfaces (12 and/or 6) are provided adjacent each other in one plane for receiving several recording carriers (Fig.8).

7. A protective sleeve according to any one of the preceding claims, **characterised in that** base surfaces for receiving in each case at least one recording carrier laterally border each other and are connected together foldably by a fold or some other hinge-like connection (Fig. 6 or 7).

8. A protective sleeve according to any one of the preceding claims, **characterised in that** at least one outer covering surface (4,5) of substantially the size of the base surface is connected foldably to the base surface by a fold or some other hinge-like connection.

9. A protective sleeve according to claim 8, **characterised in that** a part of the cover surface which lies in the direction of removal of the recording carrier is separated from the rest of the cover surface and is glued to the adjoining outer covering surface so that it completes the circular edge for receiving the recording carrier when the (outer) covering surface is hinged round on to the base surface,(Fig. 9)

10. A protective sleeve according to any one of claims 8 or 9, **characterised in that** the outer covering surface (4) is provided with an attached brochure (17) or a pocket.

11. A protective sleeve according to any one of the preceding claims, **characterised in that** a base surface (12) is provided on both sides with a cover surface for receiving a recording carrier in each case.

12. A protective sleeve according to any one of the preceding claims, **characterised in that** a recess (18) is provided in the residual surface in a region which is set back in relation to the direction of removal of the recording carrier.

13. A protective sleeve according to any one of the preceding claims, **characterised in that** a recess (30) is provided in the cover surface in a region which is set forward in relation to the direction of removal of the recording carrier.

14. A protective sleeve according to claim 12 or 13, **characterised in that** the recess (18) borders the circular edge (19,30) of the cover surface (6).

15. A protective sleeve according to any one of the preceding claims, **characterised in that** with neighbouring pairs of base surfaces (A) and cover surfaces (B) the positions of the latter two are respectively transposed.

16. A protective sleeve according to any one of the preceding claims, **characterised in that** a cover surface (D) in each case adjoins an outer covering surface (C), in which the cover surface is separated from the associated outer covering surface by a fold and can be folded over thereonto.

17. A protective sleeve according to any one of the preceding claims, **characterised in that** in each case a cover surface (A or D) adjoins each base surface (B) and in some cases each outer covering surface (C), in which each cover surface is separated from its associated base and/or outer covering surface by a fold and can be hinged folded over thereonto.

18. A protective sleeve according to any one of the preceding claims, **characterised in that** the cover surface including recesses and/or slots consists of a layer of material of constant thickness.

19. A protective sleeve according to any one of the preceding claims, **characterised in that** a number of protective sleeves is bound together into a book.

## Revendications

1. Enveloppe protectrice pour un support d'enregistrement en forme de disque, en particulier pour un Compact-Disc, constituée de deux couches de matériau qui sont reliées l'une à l'autre en se jouxtant, dont la première forme une surface de base et dont l'autre forme une surface de couverture, enveloppe dans laquelle la surface de couverture présente un évidement avec bordure de forme essentiellement circulaire, pour recevoir le support d'enregistrement et pour limiter sa direction de mouvement en direction radiale, enveloppe **caractérisée par le fait** qu'au moins deux barrettes (8 à 10) sont contiguës de la bordure (7) de forme essentiellement circulaire, barrettes qui maintiennent une surface restante (11), reliée à la surface de base (12 - figure 2) et

7

située à l'intérieur de la bordure de forme circulaire, étant précisé que les barrettes sont disposées à l'intérieur d'une partie de la périphérie circulaire correspondant à un angle allant jusqu'à 180°, et par le fait que les barrettes sont conçues flexibles de façon à autoriser une certaine distance entre la surface de couverture et la surface de base pour recevoir le support d'enregistrement (1).

2. Enveloppe protectrice selon la revendication 1, **caractérisée par le fait** que la surface restante (11) a sensiblement la forme d'un demi-cerle.

3. Enveloppe protectrice selon l'une des revendications précédentes, **caractérisée par le fait** que les - en particulier trois ou quatre - barrettes (8 à 10) sont limitées par des découpes qui, partant de la bordure de forme circulaire, s'étendent selon la direction radiale dans la surface de couverture.

4. Enveloppe protectrice selon l'une des revendications précédentes, **caractérisée par le fait** que la matériau de la surface de couverture (6, 11) est renforcé, au moins dans la sone des barrettes (8 à 10), par une couche de matériau de résistance à la traction élevée.

5. Enveloppe protectrice selon l'une des revendications précédentes, **caractérisée par le fait** que la surface de base et la surface de couverture sont en carton et sont collées l'une à l'autre dans des sones (13 à 16) situées à l'extérieur de la bordure en forme de cercle et/ou sont reliées l'une à l'autre, avec possibilité de rabattement, sur une bordure, par un pli creux ou une autre liaison du type charnière (2a).

6. Enveloppe protectrice selon l'une des revendications précédentes, **caractérisée par le fait** que la surface de base et la surface de couverture (12 et 6) sont prévues disposées l'une à côté de l'autre dans un plan (figure 8) pour recevoir plusieurs supports d'enregistrement.

7. Enveloppe protectrice selon l'une des revendications précédentes, **caractérisée par le fait** que les surfaces de base sont latéralement voisines l'une de l'autre pour recevoir chacune au moins un support d'enregistrement et sont reliées, avec possibilité de rabattement, par un pli creux ou une autre liaison du type charnière (figures 6 ou 7).

8. Enveloppe protectrice selon l'une des revendications précédentes, **caractérisée par le fait** qu'au moins une surface de recouvrement (4, 5), présentant sensiblement la dimension de la surface de base, est reliée avec la surface de base, avec possibilité de rabattement, par un pli creux ou une autre liaison du type charnière.

9. Enveloppe protectrice selon la revendication 8, **caractérisée par le fait** qu'une partie de la surface de couverture placée dans la direction d'extraction du support d'enregistrement est séparée du reste de la surface de couverture et qu'elle est collée avec la surface de recouvrement voisine de façon que, lorsque la surface de recouvrement est rabattue sur la surface de base, cette partie complète la bordure circulaire de réception du support d'enregistrement (figure 9).

10. Enveloppe protectrice selon l'une des revendications 8 à 9, **caractérisée par le fait** que la surface de recouvrement (4) comporte une brochure jointe (17) ou une poche pour cette brochure.

11. Enveloppe protectrice selon l'une des revendications précédentes, **caractérisée par le fait** qu'une surface de base (12) est munie, des deux côtés, d'une surface de couverture pour recevoir chaque fois un support d'enregistrement.

12. Enveloppe protectrice selon l'une des revendications précédentes, **caractérisée par le fait** que dans la surface restante, un évidement (18) est prévu dans une sone située en arrière par rapport à la direction d'extraction du support d'enregistrement.

13. Enveloppe protectrice selon l'une des revendications précédentes, **caractérisée par le fait** que dans la surface de couverture, un évidement (30) est prévu dans une sone située en avant par rapport à la direction d'extraction du support d'enregistrement.

14. Enveloppe protectrice selon la revendication 12 ou 13, **caractérisée par le fait** que l'évidement (18) est voisin de la bordure circulaire (19, 30) de la surface de couverture (6).

15. Enveloppe protectrice selon l'une des revendications précédentes, **caractérisée par le fait** que, dans le cas de paires, voisines l'une de l'autre, de surfaces de bases (A) et de surfaces de couverture (B), les positions des deux surfaces mentionnées en dernier lieu sont respectivement échangées.

16. Enveloppe protectrice selon l'une des revendications précédentes, **caractérisée par le fait** qu'une surface de couverture (D) est chaque fois voisine d'une surface de recouvrement (C), étant précisé que la surface de couverture est séparée de la surface de recouvrement correspondante par un pli creux et peut se rabattre sur celle-ci.

17. Enveloppe protectrice selon l'une des revendications précédentes, **caractérisée par le fait** qu'une surface de couverture (A ou D) est chaque fois voisine de chaque surface de base (B) et éventuellement de chaque surface de recouvrement (C), étant précisé que chaque surface de couverture est séparée de la surface de base ou de la surface de recouvrement correspondante, par un pli creux et qu'elle peut se rabattre sur celle-ci.

18. Enveloppe protectrice selon l'une des revendications précédentes, **caractérisée par le fait** que la surface de couverture, y compris les évidements et/ou les fentes, est constituée d'une couche de matériau d'épaisseur constante.

19. Enveloppe protectrice selon l'une des revendications préceéentes, **caractérisée par le fait** qu'une pluralité d'enveloppes protectrices sont reliées pour former un livre.

Fig.1

Fig. 2

EP 0 335 826 B1

5'  3'  1'  6'  2'  4'

10'  9'  8'

EP 0 335 826 B1

Fig. 3

Fig. 4

Fig. 5

Fig.6

Fig.7

Fig.9

Fig.8

Fig. 10

Fig. 11

Fig.12